Europäisches Patentamt

European Patent Office

Office européen des brevets

(11) Veröffentlichungsnummer: **0 402 795**
**A1**

## EUROPÄISCHE PATENTANMELDUNG

(21) Anmeldenummer: **90110918.1**

(22) Anmeldetag: **09.06.90**

(51) Int. Cl.5: **G01N 21/82, G01N 33/53**

(30) Priorität: **13.06.89 DE 3919260**

(43) Veröffentlichungstag der Anmeldung:
**19.12.90 Patentblatt 90/51**

(84) Benannte Vertragsstaaten:
**AT BE CH DE ES FR GB IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **1Schulze, Detlef**
**Albert-Blank-Strasse 15**
**D-6230 Frankfurt am Main 80(DE)**
Erfinder: **Schmidtberger, Rudolf**
**Im Salegrund 1**
**D-3550 Marburg(DE)**

(54) **Verfahren zum quantitativen Auswerten von Agglutinationsreaktionen.**

(57) Bei dem Verfahren zum quantitativen Auswerten von Agglutinationsreaktionen zwischen einem Reagenz und einer zu untersuchenden biologischen Flüssigkeit werden das Reagenz und die biologische Flüssigkeit unter einer taumelnden Bewegung durch Rühren innig vermischt. Danach wird das Gemisch in den Strahlengang einer optischen Meßanordnung gebracht und unter Beibehaltung der Taumelbewegung und Überlagerung einer Translativbewegung senkrecht zur optischen Achse der Meßanordnung die im Gemisch gebildeten Agglutinate auf eine Mattscheibe abgebildet und das Abbild mit einer Auswerteeinheit ausgewertet.

Fig. 1

EP 0 402 795 A1

## Verfahren zum quantitativen Auswerten von Agglutinationsreaktionen

Gegenstand der Erfindung ist ein Verfahren zum quantitativen Auswerten von Agglutinationsreaktionen zwischen einem Reagenz und einer biologischen Flüssigkeit.

Agglutinationsreaktionen als Diagnosemethode dienen dem Auffinden und Erkennen bestimmter Krankheiten, wie Myocard-Infarkten, Entzündungen, Rheumafaktoren etc. Bei dem für die Diagnose erforderlichen Test wird biologische Flüssigkeit, wie Blutserum mit einem spezifischen Antigen auf einer geschwärzten Testplatte vermischt und unter taumelnder Bewegung etwa 2 Minuten reagieren lassen. Sind Antikörper, die mit dem spezifischen Antigen reagieren, im Serum vorhanden, bilden sich Agglutinate, die je nach Konzentration der Antikörper im Serum visuell erkannt werden. Werden Agglutinate schon vor Ablauf der 2 Minuten erkannt, können auch grobe Aussagen über deren Konzentration gemacht werden, wenn entsprechende Verdünnungsreihen zur Beurteilung der Agglutinationsreaktionen herangezogen werden. Bei diesen Tests sind in der Regel Kontrollmessungen mit positiven und negativen Seren notwendig. In allen Fällen hängt die Güte der Beurteilung von der Erfahrung des Beobachters ab. Hier will die Erfindung Abhilfe schaffen.

Die Aufgabe wird durch ein Verfahren der eingangsgenannten Art gelöst, das dadurch gekennzeichnet ist, daß das Reagenz und die biologische Flüssigkeit unter einer taumelnden Bewegung durch Rühren innig vermischt werden, danach das Gemisch in den Strahlengang einer optischen Meßanordnung gebracht wird und unter Beibehaltung der Taumelbewegung und Überlagerung einer Translativbewegung senkrecht zur optischen Achse der Meßanordnung die im Gemisch gebildeten Agglutinate auf eine Mattscheibe abgebildet werden und das Abbild mit einer Auswerteeinheit ausgewertet wird.

Mit diesem Verfahren kann der Zeitpunkt des Eintretens einer Agglutinationsreaktion genau und auch reproduzierbar bestimmt werden. Das Verfahren ermöglicht ferner eine Auswertung von konzentrationsabhängigen Kinetiken, und mittels einer aufgenommenen Eichkurve kann aus den gemessenen Signalen einer unbekannten Reaktion die Konzentration der Agglutinate ermittelt werden.

Im folgenden wird das Verfahren anhand der Zeichnungen näher erläutert. Es zeigt

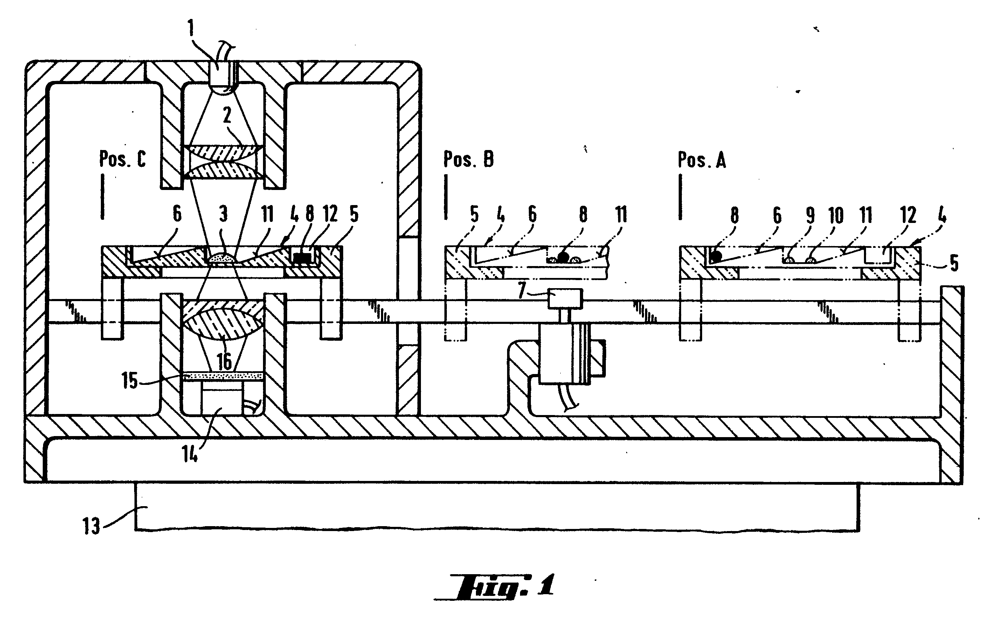

Figur 1 die Meßanordnung von der Seite geschnitten,

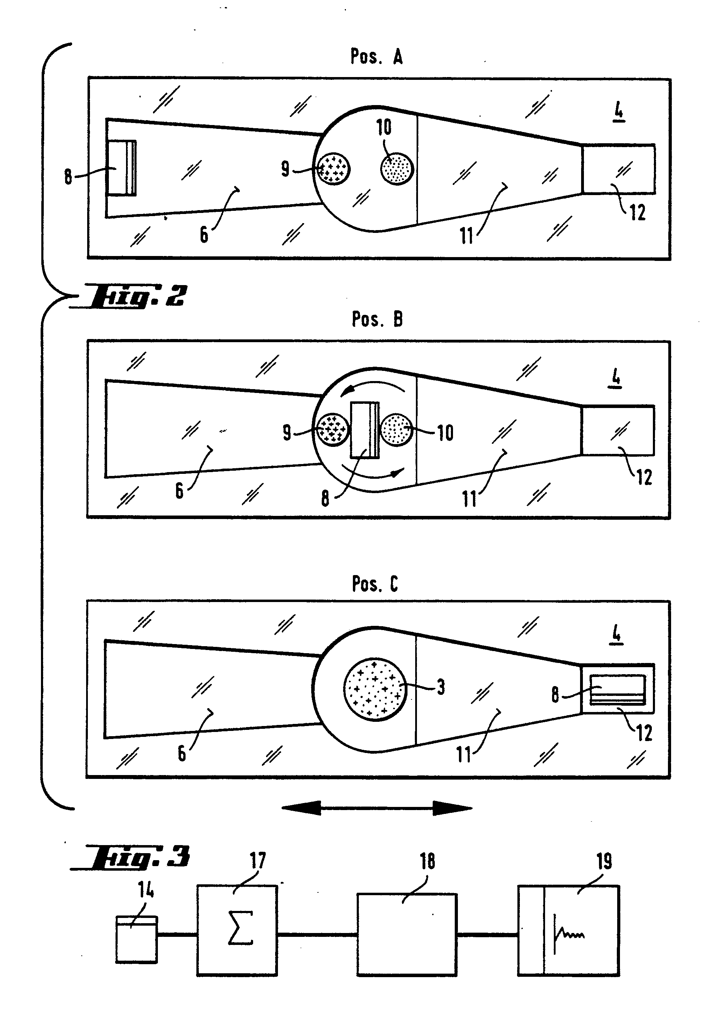

Figur 2 den Objektträger von oben jeweils in den Positonen A, B, C und

Figur 3 die Auswerteeinrichtung schematisch.

Ein Reagenz 9 und eine zu untersuchende biologische Flüssigkeit, z.B. ein Patientenserum 10 werden auf einen Objektträger 4 pipettiert, der sich auf einem Schlitten 5 in Position A befindet. Nach dem Pipettiervorgang fährt der Schlitten durch einen Motor oder manuel angetriebenen (nicht dargestellt) in Position B. Dabei wird ein ferromagnetischer Rührstab 8 von einem Magnetrührer 7 über eine Schräge 6 in eine Vertiefung gezogen, in der sich das Reagenz 9 und das Serum 10 befindet. Der Magnetrührer 7 beginnt zu Drehen und bewegt dadurch den Rührstab 8, der das Reagenz 9 und das Serum 10 vermischt. Mit dem Beginn des Rührvorgangs erfolgt mit Hilfe eines Rechners 18, der Teil einer Auswerteeinheit (Figur 3) ist, eine Zeitmessung. Zeitgleich wird die gesamte Meßanordnung durch einen Taumler 13 in eine taumelnde Bewegung versetzt. Die Taumelbewegung ist eine Rotationsbewegung, die von einer Kippbewegung überlagert wird. Diese Bewegungsform gewährleistet eine gleichmäßige Bewegung des Reagenz im zu untersuchenden Flüssigkeitstropfen 3. Sind Antikörper im Serum vorhanden, entstehen nach einer meßbaren Reaktionszeit die mit einem Mikroskop deutlich beobachtbaren Agglutinate. Nach einigen Sekunden wird der Magnetrührer 7 abgeschaltet und der Schlitten 5 fährt in Position C unter eine optische Meßanordnung bestehend aus Lichtquelle 1, Kondensor 2, Objektiv 16 und Mattscheibe 15. Während der Fahrt nach Position C wird der Rührstab 8 über eine weitere Schräge 11 in einer Mulde 12 gezogen und dort fixiert. In Position C wird der Schlitten 5 senkrecht zur optischen Achse der Meßanordnung translativ mit einer Frequenz von 0,5 bis 5 Hz vorzugsweise mit 1 Hz bewegt. Die Translationsbewegung ist der Taumelbewegung überlagert. Der Flüssigkeitstropfen 3 auf dem Objektträger 4 wird von einer Lichtquelle 1 beleuchtet und auf Grund der zusätzlichen Translationsbewegung des Schlittens 5 werden die sich bildenden Agglutinate aus einem schmalen Streifen des Tropfens 3 vom Objektiv 16 auf die Mattscheibe 15 scharf abgebildet. Die abgebildeten Agglutinate werden mit einem Detektor 14 detektiert und in elektrische Impulse umgewandelt, die mit einem Zähler 17 gezählt werden. Nach einer gewissen Zeit, der Agglutinationszeit steigt die Zahl der gemessenen Signale stark an. Dieser Zeitpunkt wird festgehalten und angezeigt. Durch Anschluß eines Plotters 19 kann der Meßverlauf graphisch dargestellt werden. Dabei werden die Impulse über der Zeit aufgetragen. Durch Vergleich der Meßsignale des auszuwerteten Serums in einer Eichkurve wird die Konzentration der Agglutinate ermittelt.

**Ansprüche**

1. Verfahren zum quantitativen Auswerten von Agglutinationsreaktionen zwischen einem Reagenz und einer zu untersuchenden biologischen Flüssigkeit, dadurch gekennzeichnet, daß das Reagenz und die biologische Flüssigkeit unter einer taumelnden Bewegung durch Rühren innig vermischt werden, danach das Gemisch in den Strahlengang einer optischen Meßanordnung gebracht wird und unter Beibehaltung der Taumelbewegrnng und Überlagerung einer Translativbewegung senkrecht zur optischen Achse der Meßanordung die im Gemisch gebildeten Agglutinate auf eine Mattscheibe abgebildet werden und das Abbild mit einer Auswerteeinheit ausgewertet wird.

Pos. A

Pos. B

Pos. C

*Fig. 1*

EP 0 402 795 A1

Pos. A

10
9
8
6
11
12
4

**Fig. 2**

Pos. B

9
10
8
6
11
12
4

Pos. C

3
8
6
11
12
4

**Fig. 3**

14
17
Σ
18
19

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 545 610 (LE MATERIEL BIOMEDICAL)<br>* Zusammenfassung; Seite 10, Zeilen 20-27 *<br>--- | 1 | G 01 N 21/82<br>G 01 N 33/53 |
| Y | FR-A-2 509 861 (BIONAVA SARL)<br>* Seite 1, Zeilen 1-6; Seite 4, Zeile 22 - Seite 5, Zeile 22 *<br>--- | 1 | |
| A | EP-A-0 046 430 (C.E.A.)<br>* Zusammenfassung; Anspruch 1 *<br>--- | 1 | |
| A | WO-A-8 502 259 (LABSYSTEMS OY)<br>* Zusammenfassung; Seite 3, Zeilen 7-37 *<br>--- | 1 | |
| A | US-A-4 197 088 (P.M. MESEROL et al.)<br>* Zusammenfassung *<br>--- | 1 | |
| A | FR-A-2 536 859 (OLYMPUS OPTICAL CO. LTD.)<br>* Zusammenfassung *<br>--- | 1 | RECHERCHIERTE SACHGEBIETE (Int. Cl.5) |
| A | EP-A-0 198 327 (THE GREEN CROSS CORP.)<br>* Zusammenfassung; Anspruch 1 *<br>----- | 1 | G 01 N |

Der vorliegende Recherchenbericht wurde für alle Patentansprüche erstellt

| Recherchenort | Abschlußdatum der Recherche | Prüfer |
|---|---|---|
| BERLIN | 21-09-1990 | BRISON O.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)